# FASCICULE DE BREVET EUROPEEN

(11) **EP 1 841 703 B1**
(45) Date de publication et mention de la délivrance du brevet: **06.01.2010**
(21) Numéro de dépôt: 05815912.0
(22) Date de dépôt: 25.10.2005
(51) Int. Cl.: C03C 3/091, C03C 3/118

(54) **FILS DE VERRE DE RENFORCEMENT BIOSOLUBLES**
BIOLÖSLICHE VERSTÄRKUNGSGLASFÄDEN
BIOSOLUBLE REINFORCEMENT GLASS YARNS

(30) Priorité: 27.10.2004 FR 0452453
(43) Date de publication de la demande: 10.10.2007
(73) Titulaire: Saint-Gobain Technical Fabrics Europe, 73000 Chambéry (FR)
(72) Inventeur: BERTHEREAU, Anne, F-73190 CHALLES LES EAUX (FR); GERARD, Dominique, F-73290 LA MOTTE SERVOLEX (FR)
(74) Mandataire: Jamet, Vincent
(86) Numéro de dépôt international: PCT/FR2005/050895
(87) Numéro de publication internationale: WO 2006/045981

(56) Documents cités:
- EP-A- 0 412 878
- WO-A-2004/011379
- US-A- 5 945 360

## Description

La présente invention se rapporte à des fils de verre « de renforcement », c'est-à-dire utilisables pour le renforcement de matières organiques et/ou inorganiques et utilisables comme fils textiles, qui sont aptes à se solubiliser dans les milieux physiologiques (« biosolubles »).

L'invention vise plus précisément des fils de verre présentant une composition nouvelle particulièrement avantageuse.

Le domaine des fils de verre de renforcement appartient à un domaine particulier de l'industrie du verre. Les fils sont obtenus par le procédé qui consiste à étirer mécaniquement des filets de verre fondu s'écoulant d'orifices disposés à la base d'une filière généralement chauffée par effet Joule. Les fils sont élaborés à partir de compositions de verre spécifiques qui permettent d'avoir un verre apte à être étiré sous forme de fins filaments, de quelques micromètres de diamètre, avant d'être rassemblés pour former soit un fil continu (stratifil) soit une mèche de filaments discontinus (verranne). Ce fil peut être utilisé tel quel ou subir une torsion pour obtenir un fil textile adapté à la réalisation de tissus de verre.

Il est admis que pour pouvoir être fibré dans les conditions précitées, le verre doit présenter une marge de formage d'au moins 70°C qui est définie par la différence entre la température du verre à la viscosité de 10³ Poises et la température de liquidus.

Les verres de type E font partie des verres fibrables les plus communément utilisés. Ces verres dérivent de l'eutectique à 1170°C du diagramme ternaire SiO₂-Al₂O₃-CaO ; ils comprennent 52 à 56 % de SiO₂, 12 à 16 % d'Al₂O₃, 16 à 19 % de CaO, 3 à 6 % de MgO et 9 à 11 % de B₂O₃ (US-A-2 334 961) ou 52 à 56 % de SiO₂, 12 à 16 % d'Al₂O₃, 19 à 25 % de CaO et 8 à 13 % de B₂O₃ (US-A-2 571 074).

Les compositions de verre E ont fait l'objet de nombreuses modifications dans le but notamment de réduire les émissions polluantes dans l'atmosphère, d'augmenter la plage de travail et de réduire leur coût. Néanmoins, ces compositions conservent une faible résistance à la corrosion en milieu acide et une faible aptitude à se dissoudre dans les milieux biologiques (« biosolubilité »).

Les verres de type C font également partie des verres fibrables, avec en outre l'avantage d'être plus résistants à la corrosion acide. Ces verres à base de SiO₂-Na₂O-CaO-B₂O₃, sont décrits dans US-A-2 308 857 ; il comprennent 60 à 65 % de SiO₂, 15 à 20 % de CaO et MgO, 8 à 12 % de Na₂O et K₂O, 2 à 7 % de B₂O₃ et 2 à 6 % de R₂O₃ (Al₂O₃ et Fe₂O₃).

Par la suite, des modifications ont été apportées aux verres de type C dans le but d'améliorer la résistance chimique et la résistance hydrolytique.

Dans US-A-3 513 002 et US-A-4 510 252, la résistance aux acides est accrue par l'utilisation d'une teneur silice supérieure à 67 % et de teneurs particulières en oxydes alcalino-terreux. Ainsi, US-A-3 513 002 propose de limiter la teneur en alcali no-terreux à 10,5 % en associant 3 à 6,5 % de CaO et 0,5 à 4 % de MgO alors que US-A-4 510 252 propose de combiner 10 à 13 % de CaO et 2 à 3 % de MgO.

Dans US-A-4 628 038, il est proposé d'améliorer la résistance hydrolytique du verre en associant une teneur en SiO₂ réduite (au plus 54,5 %) et une teneur élevée en oxydes alcalins, notamment en CaO (15,5 à 16,5 %), et en alumine (14,5 à 17,5%).

La tendance actuelle est d'améliorer l'innocuité du verre en le rendant susceptible de mieux se dissoudre les milieux physiologiques, et permettre ainsi de préserver la santé des personnes qui pourraient être amenées à inhaler des fibres de verre lors de la manipulation des fils. Bien entendu, l'amélioration du caractère « biosoluble » des fils ne doit pas se traduire par une perte des autres propriétés du verre qui doit en particulier rester apte à être fibré dans les conditions usuelles (plage de travail élevée et vitesse de dévitrification faible), être résistant aux acides, conserver les propriétés liées mécaniques à la fonction de renforcement et rester à un coût de production acceptable.

La présente invention a ainsi pour objet des fils de verre répondant au souhait précédent, c'est-à-dire des fils formés d'un verre qui présente un des meilleurs compromis possible entre ses propriétés, en particulier de biosolubilité, et son aptitude au fibrage.

Ces buts sont atteints grâce à des fils de verre dont la composition comprend essentiellement les constituants suivants dans les limites définies ci-après exprimées en pourcentages pondéraux:

| | |
|---|---|
| SiO₂ | 55 à 66% |
| Al₂O₃ | 2 à 5 % |
| B₂O₃ | 3à5% |
| CaO | 3 à 9 %, de préférence 6 à 9 % |
| MgO | 2,5 à 4 % |
| Na₂O | moins de 17 % |
| K₂O | moins de 2 % |
| Li₂O | moins de 2 % |
| Na₂O+ K₂O+Li₂O | moins de 18 %, de préférence plus de 12 % |
| TiO₂ | moins de 1 % |
| P₂O₅ | moins de 1 % |

cette composition comprenant en outre moins de 1 % d'autre(s) constituant(s) et étant exempte de fluor.

La silice SiO₂ est l'oxyde majoritaire qui forme le réseau des verres selon l'invention et joue un rôle essentiel sur la corrosion acide. Dans le cadre des limites définies précédemment, lorsque le pourcentage de ce constituant est inférieur à 55 %, le verre devient trop hygroscopique et son coût est élevé. Lorsque son pourcentage excède 66 %, le verre devient très visqueux et difficile à fondre sans apport supplémentaire en énergie ; en outre, le verre est très « raide » et les fils obtenus sont difficiles à couper.

L'alumine Al₂O₃ constitue également un formateur du réseau des verres selon l'invention et joue un rôle très important à l'égard de la résistance hydrolytique. Dans le cadre des limites définies selon l'invention, la diminution du pourcentage de cet oxyde en dessous de 2 % se traduit par une attaque hydrolytique du verre alors que l'augmentation du pourcentage de cet oxyde au-dessus de 5 % entraîne une diminution de la résistance aux acides et une augmentation du risque de dévitrification.

L'anhydride borique B₂O₃ permet de diminuer la température de fusion du verre. Pour des raisons de coût, sa teneur est limitée à 5 % ; en dessous de 2 %, la viscosité du verre augmente et la plage de travail devient trop faible pour produire le verre dans des conditions acceptables.

Dans la composition selon l'invention, la chaux CaO et la magnésie MgO permettent de régler la viscosité et de contrôler la vitesse de dévitrification des verres selon l'invention. Dans le cadre de l'invention, une bonne aptitude au fibrage est obtenue avec des taux de CaO et de MgO compris entre 3 et 9 % et 2,5 et 4 % respectivement. De préférence, la somme des teneurs de ces oxydes alcalino-terreux ne dépasse pas 12 %, le problème de la dévitrification s'accentuant dans des proportions inacceptables au-dessus de cette valeur. Par ailleurs, la teneur minimale en CaO et MgO est respectivement de 3 et 2,5 % pour les raisons de facilité de fibrage vues précédemment ainsi que pour des considérations économiques et pratiques. Le cas échéant, une partie de ces oxydes alcalino-terreux pouvant aller jusqu'à 3 % peut être remplacée par un ou plusieurs oxydes choisis parmi SrO, BaO et ZnO.

Selon un mode de réalisation préféré, le rapport de la teneur en MgO à la teneur en CaO est inférieur à 0,5, de préférence inférieur à 0,45, afin d'éviter les problèmes de dévitrification spécifiques (respectivement en wollastonite et en diopside) survenant à un rapport plus élevé.

Les oxydes alcalins Na₂O, K₂O et Li₂O sont introduits dans les compositions de verre selon l'invention pour réduire la viscosité du verre et limiter davantage la dévitrification. La teneur en oxydes alcalins Na₂O + K₂O + Li₂O doit cependant rester inférieure à 18 % pour éviter une augmentation d'attaque hydrolytique. Dans la plupart des cas selon l'invention, la teneur totale de ces oxydes alcalins est supérieure à 12 % afin que la viscosité du verre ne soit pas trop élevée.

De préférence, la teneur en K₂O n'excède pas 2 % pour des raisons de coût essentiellement car il est plus onéreux que Na₂O même si son efficacité en tant que fondant est bien plus élevée.

De préférence encore, la teneur en Li₂O n'excède pas 2 % et généralement la composition de verre selon l'invention ne contient pas de Li₂O.

La composition de verre selon l'invention peut contenir en outre du TiO₂ qui améliore les propriétés mécaniques du verre. Il peut être présent à titre d'impureté ou avoir été ajouté volontairement à la composition à un taux pouvant aller jusqu'à 1 % car au-delà le verre présente une coloration jaune indésirable.

Selon l'invention, la composition de verre peut encore contenir du P₂O₅ afin d'améliorer la biosolubilité du verre. Pour limiter les risques de dévitrification lors du fibrage, la teneur en P₂O₅ reste inférieure à 1 %.

D'autres constituants du verre différents de ceux déjà considérés (c'est-à-dire différents de SiO₂, Al₂O₃, B₂O₃, CaO, MgO, Na₂O, K₂O, Li₂O, TiO₂ et P₂O₅) peuvent être présents dans la composition. Ces constituants constituent les impuretés inévitables du verre qui proviennent des matières premières vitrifiables, tels que les oxydes de fer (exprimés sous forme de Fe₂O₃), ou résultent de la dégradation des matériaux réfractaires du four, tels que Cr₂O₃ et ZrO₂.

Ces impuretés présentent les inconvénients suivants : Fe₂O₃ colore le verre et limite les transferts de chaleur lors de la fusion du verre, Cr₂O₃ accroît la température de liquidus et par conséquent augmente les risques de dévitrification du verre, et ZrO₂ combiné à l'alumine accroît la vitesse de dévitrification du verre. Pour limiter les risques lors du fibrage et préserver les propriétés du verre, la teneur totale en ces impuretés est maintenue inférieure à 0,5 %, de préférence inférieure à 0,2 %. De préférence, la teneur en chacun des composants est inférieure à 0,4 %.

Conformément à l'invention, la composition de verre est exempte de fluor pour éviter d'avoir à appliquer un traitement particulier des fumées dans les installations industrielles.

La composition de verre selon l'invention présente une plage de travail répondant à la définition précédemment donnée supérieure à 70°C, de préférence supérieure à 100 °C, et mieux encore supérieure à 140°C.

Les fils selon l'invention peuvent ainsi être produits dans les installations industrielles classiquement utilisés pour la production de fils de verre E.

Comme déjà mentionné, les fils de verre conformes à l'invention sont' obtenus à partir des verres de composition précédemment décrite selon le procédé suivant : on étire une multiplicité de filets de verre fondu, s'écoulant d'une multiplicité d'orifices disposés à la base d'une ou plusieurs filières, sous la forme d'une ou plusieurs nappes de filaments continus, puis on rassemble les filaments en un ou plusieurs fils que l'on collecte sur un support en mouvement. Il peut s'agir d'un support en rotation lorsque les fils sont collectés sous forme d'enroulements (stratifils) ou d'un support en translation lorsque que les fils sont coupés par un organe servant également à les étirer ou lorsque les fils sont projetés par un organe servant à les étirer de façon à former un mat.

Les fils de verre conformes à l'invention peuvent également se présenter sous la forme de mèches formées de filaments de verre discontinus sensiblement parallèles, sans torsion, communément appelées « verrannes ».

Les verrannes sont obtenues à partir de filets de verre fondu s'écoulant de la filière étirés dans les conditions décrites précédemment, puis ils sont enroulés sous la forme d'une nappe sur un cylindre situé sensiblement à la verticale de la filière. Après rotation du cylindre d'environ 270°, la nappe de filaments arrive au contact d'un racle qui la décolle de la surface du cylindre et coupe les filaments, puis ces filaments sont dirigés vers un dispositif oblong de forme conique comportant en son centre un fil d'âme qui se déplace d'une extrémité à l'autre du cône. Les filaments issus du cylindre s'entourent autour du fil d'âme et forment une mèche qui, à la sortie du cône est enroulée sur un support rotatif de type bobinoir placé latéralement à l'élément oblong. Un dispositif adapté est décrit dans FR-A-2 817 548.

Les fils obtenus (stratifils ou verrannes), éventuellement après d'autres opérations de transformation, peuvent ainsi se présenter sous différentes formes : fils continus, fils coupés, tresses, rubans, mats, réseaux..., ces fils étant composés de filaments de diamètre pouvant aller de 5 à 24 microns environ.

Le verre fondu alimentant les filières est obtenu à partir de matières premières le plus souvent naturelles ayant un taux d'impuretés variable qui sont mélangées dans des proportions appropriées pour obtenir la composition verrière désirée, laquelle composition est ensuite fondue. La température de fusion du verre est réglée de façon traditionnelle par l'opérateur de façon à obtenir la viscosité désirée permettant le fibrage du verre en évitant les problèmes de dévitrification. Sauf s'ils sont destinés à former de la bourre, les filaments sont revêtus avant leur rassemblement sous forme de fils d'une composition d'ensimage destinée à les protéger de l'abrasion et à favoriser leur association ultérieure avec les matières à renforcer.

Eventuellement, les fils de verre selon l'invention peuvent déjà avoir été associés, par exemple en cours d'étirage, à des filaments de matière organique de façon à obtenir des fils composites. Par extension, par « fils de verre dont la composition comprend... », on entend selon l'invention des « fils formés à partir de filaments de verre dont la composition comprend... », les filaments de verre étant éventuellement associés à des filaments organiques avant le rassemblement des filaments en stratifils ou en verrannes.

Les fils de verre selon l'invention, en particulier les stratifils, sont utilisés en tant que matériau de renforcement de matières diverses, organiques ou inorganiques. Les composites formés contiennent au moins une matière organique et/ou inorganique et les fils de verre selon l'invention éventuellement associés à d'autres fils de verre.

Les verrannes selon l'invention peuvent être utilisées comme fils textiles, notamment pour réaliser des toiles murales à peindre.

Les exemples qui suivent permettent d'illustrer l'invention sans toutefois la limiter.

Les avantages présentés par les fils de verre selon l'invention (Exemples 1 et 2) figurent dans le tableau par comparaison aux exemples comparatifs (Exemples 3 et 4).

Dans ces exemples, des fils de verre composés de filaments de verre de 14 µm sont obtenus par étirage

Dans ces exemples, on utilise les méthodes de mesure suivantes :
➢ Le module d'Young spécifique correspond au rapport du module d'Young (E), mesuré selon la norme ASTM C 1259-01, à la masse volumique de l'échantillon de verre utilisé pour la mesure. Il est exprimé en MPa.kg m³.
➢ La résistance hydrolytique est évaluée par la méthode « DGG » qui consiste à mesurer l'attaque à l'eau de verre. Pour cela, 10 g de verre broyé (taille des grains : 360-400 µm) sont plongés dans 100 ml d'eau à 98°C pendant 5 heures. Après refroidissement rapide, la solution est filtrée et le filtrat est évaporé à sec. La perte de masse est donnée par la masse de résidu sec (en mg/10 g de verre).
➢ La résistance en traction unitaire (RTU) est mesurée dans les conditions de la norme ISO 3341. Elle est exprimée en MPa.
➢ La résistance en milieu acide est évaluée en mesurant la perte de masse d'une quantité donnée de fils de verre après immersion dans une solution d'HCl 2 M à 30°C pendant 100 heures. La perte de masse est exprimée en %.
➢ L'aptitude du fil à se solubiliser dans les milieux physiologiques (« biosolubilité ») est mesurée :
   - a) par l'indice KI calculé à partir de la relation suivante : KI = Σ (% de Na₂O, K₂O, CaO, MgO, BaO, B₂O₃) - 2 x (% d'Al₂O₃)
   - b) par la vitesse de dissolution de la silice in vitro dans un fluide neutre après 14 jours mesurée dans les conditions de la norme NF T03-410. La vitesse est exprimée en ng/cm²/h.
   - c) par le temps de demi-vie de fibres longues (> 20 µm) mesuré in vivo dans les conditions de la directive européenne 97/69/CE, selon le protocole ECB/TM/27 rev.7 (biopersistance de fibres après instillation intra-trachéale chez le rat de 0,5 mg de fibres une fois par jour pendant 4 jours consécutifs. Le temps de demi-vie est exprimé en jour.

Dans les exemples, on note :
➢ T(log 3) la température (en °C) à laquelle la viscosité du verre est égale à 10³ Poises (déciPascal.seconde),
➢ T_{liquidus} la température de liquidus (en °C) du verre correspondant à la température à laquelle la phase la plus réfractaire pouvant dévitrifier dans le verre a une vitesse de croissance nulle (ce qui correspond ainsi à la température de fusion de cette phase dévitrifiée),
> Plage de travail la différence de températures (en °C) : T(log 3) - T_{liquidus}, et
➢ Vₘₐₓ la vitesse de dévitrification maximale (en µm/min) des différentes phases du verre.

L'exemple 3 est un exemple comparatif illustrant une composition de verre de type C adaptée à la réalisation de fils, notamment de verranne. Il s'agit d'un verre à teneur plus faible en CaO et plus forte en alcalins (Na₂O et K₂O) que le verre C décrit dans US-A-2 308 857.

L'exemple 4 est un exemple comparatif illustrant une composition de verre E classique.

Les compositions selon l'invention (Ex. 1 et 2) présentent une plage de travail supérieure à 150°C, bien supérieure à celle du verre C (Ex. 3) et du verre E (Ex. 4).

Les compositions ont une viscosité compatible avec le procédé de fibrage avec notamment une température T(log 3) inférieure ou égale à 1070°C, comparable avec celle du verre C (Ex. 3) et très inférieure à celle du verre E (Ex. 4). On note que la température de liquidus est fortement abaissée par rapport à celle des verres C et E précités.

Avec les verres selon l'invention, on obtient de meilleures propriétés mécaniques que pour le verre C (Ex. 3), notamment un module d'Young spécifique plus élevé, se rapprochant par ailleurs de celui du verre E (Ex. 4).

Les verres selon l'invention sont plus résistants aux acides que le verre E (Ex. 4).

On note également que la biosolubilité des fils selon l'invention est améliorée par rapport aux fils de verre C (Ex. 3 ; KI) et supérieure d'un facteur 10 aux fils de verre E (Ex. 4 ; KI et vitesse de dissolution de la silice). En outre, les fils de verre selon l'invention ont un temps de demi-vie compatible avec la définition de biosolubilité au sens de la norme : sont considérés comme « biosolubles » des fils ayant un temps de demi-vie inférieur à 40 jours.

Les fils de verre selon l'invention sont aussi moins coûteux à produire que les fils de verre C de l'Exemple 3 : par rapport aux fils de verre E traditionnels, une économie d'au moins 38 % sur le coût des matières premières est réalisée alors que celle-ci n'est que de l'ordre de 28 % pour les fils de verre C précités.

### EXEMPLES 5 ET 6

Des verrannes ont été préparées à partir des compositions de verre décrites dans l'Exemple 1 (Exemple 5) et dans l'Exemple 3 comparatif (Exemple 6).

On forme une verranne constituée de 800 filaments de verre dans les conditions et avec le dispositif selon FR-A2 817 548 décrits précédemment.

Sur la verranne, on mesure le diamètre moyen des filaments, en µm, et la régularité de la mèche par la détermination de :
- la largeur moyenne (I_{moy}), en mm,
- la régularité définie par le pourcentage des points mesurés correspondant à une largeur de mèche comprise entre I_{moy}-30 % et I_{moy} +35 %,
- du taux de « points fins » défini par le pourcentage des points mesurés pour lesquels la largeur de la mèche est inférieure à 30 % de la largeur moyenne I_{moy}. Ce paramètre permet d'apprécier la qualité de la mèche au regard des rétrécissements,
- du taux de « points épais » défini par le pourcentage des points mesurés pour lesquels la largeur de la mèche est supérieure à 70 % de la largeur moyenne I_{moy}. Ce paramètre permet d'apprécier la qualité de la mèche au regard des élargissements.

La régularité est mesurée sur une longueur de verranne égale à 15 mètres, avec un pas de 0,7 mm, au moyen d'un régularimètre laser.

Les résultats sont donnés ci-après :

| | Exemple 5 | Exemple 6 |
|---|---|---|
| Composition de verre | Ex. 1 | Ex. 3 |
| Diamètre moyen des filaments (µm) | 10,8 | 9,6 |
| Ecart-type | 1,3 | 1,8 |
| Largeur moyenne (mm) | 3,66 | 3,68 |
| Ecart-type | 0,81 | 0,89 |
| Régularité (%) | 86,1 | 82,8 |
| Points fins (%) | 6,5 | 9,0 |
| Points épais (%) | 0,16 | 0,17 |

La verranne de l'exemple 5 selon l'invention présente une régularité plus importante que celle obtenue avec le verre C classique adapté à cet usage (Ex. 6) pour une largeur moyenne similaire.

Par rapport à l'exemple 6, le taux de points fins est diminué de 27 % et le taux de points épais est inchangé, ce qui se traduit par une meilleure intégrité de la mèche lors du tissage.

La verranne selon l'invention a une largeur moyenne importante autorisant la fabrication de tissus ayant un bon pouvoir couvrant (peu de « trous ») avec un taux de casse réduit de la mèche.

**Tableau 1**

| | Ex.1 | Ex. 2 | Ex.3 (comparatif) | Ex. 4 (comparatif) |
|---|---|---|---|---|
| SiO₂ | 63,80 | 65,30 | 61,70 | 53,00 |
| Al₂O₃ | 3,40 | 2,10 | 5,30 | 14,50 |
| B₂O₃ | 4,80 | 4,50 | 6,35 | 7,60 |
| CaO | 7,10 | 8,10 | 6,60 | 23,00 |
| MgO | 3,00 | 2,40 | 3,75 | 0,40 |
| Na₂O | 16,20 | 16,40 | 14,35 | 0,55 |
| K₂O | 1,20 | 0,70 | 1,05 | 0,10 |
| Fe₂O₃ | 0,10 | 0,10 | 0,08 | 0,20 |
| F₂ | 0 | 0 | 0,65 | 0 |
| T(log 3) (°C) | 1070 | 1055 | 1078 | 1200 |
| T_{liquidus} (°C) | 915 | 890 | 966 | 1080 |
| Marge de formage (°C) | 155 | 165 | 112 | 120 |
| Vₘₐₓ (µm/min) | 0,2 | 0,8 | - | 0,9 |
| E spécifique (MPa.kg⁻¹.m³) | 29,3 | - | 27,7 | 30,9 |
| DGG (mg/10 g de verre) | 17 | 24 | 20 | 7 |
| RTU (MPa) | 2500 | 2500 | 2500 | 3400 |
| Corrosion acide (%) | 0,5 | 0,7 | - | 12 |

| Biosolubilité | | | | |
|---|---|---|---|---|
| - KI | 25,40 | 27,90 | 21,55 | 2,65 |
| - Vitesse de dissolution de la silice (ng/cm²/h) | 30 | - | - | 3 |
| - Demi-vie (jour) | 28 | - | - | - |

## Revendications

1. Fil de verre de renforcement dont la composition comprend les constituants suivants, dans les limites définies ci-après exprimées en pourcentages pondéraux :
| | |
|---|---|
| SiO₂ | 55 à 66 % |
| Al₂O₃ | 2à5% |
| B₂O₃ | 3 à 5% |
| CaO | 3 à 9 %, de préférence 6 à 9 % |
| MgO | 2,5 à 4 % |
| Na₂O | moins de 17 % |
| K₂O | moins de 2 % |
| Li₂O | moins de 2 % |
| Na₂O+ K₂O+Li₂O | moins de 18 %, |
| TiO₂ | moins de 1 % |
| P₂O₅ | moins de 1 % |
cette composition comprenant en outre moins de 1 % d'autre(s) constituant(s) et étant exempte de fluor.

2. Fil de verre selon la revendication 1, **caractérisé en ce que** le verre formant le fil présente une plage de travail supérieure à 70°C, de préférence supérieure à 100°C, et mieux encore supérieure à 140°C.

3. Fil de verre selon l'une des revendications 1 ou 2, **caractérisé en ce que** la composition de verre a un rapport de la teneur en MgO à la teneur en CaO inférieur à 0,5, de préférence inférieur à 0,45.

4. Fil de verre selon l'une des revendications 1 à 3, **caractérisé en ce que** la composition de verre comprend de 6 à 9 % de CaO.

5. Fil de verre selon l'une des revendications 1 à 4, **caractérisé en ce que** la composition de verre comprend plus de 12% en Na₂O+ K₂O+Li₂O.

6. Fil de verre selon l'une des revendication 1 à 5, **caractérisé en ce qu'**il se présente sous la forme de verranne.

7. Fil de verre selon l'une des revendications 1 à 6, **caractérisé en ce qu'**il est obtenu par un procédé de fibrage consistant à étirer mécaniquement des filets de verre fondu s'écoulant d'orifices disposés à la base d'une filière chauffée, en particulier par effet Joule, et à rassembler les filaments en fil(s).

8. Fil de verre selon la revendication 7, **caractérisé en ce que** les filaments sont continus.

9. Fil de verre selon la revendication 7, **caractérisé en ce qu'**il se présente sous la forme d'une mèche de filaments discontinus, sensiblement parallèles, sans torsion.

10. Composite de fils de verre et de matière organique, **caractérisé en ce qu'**il comprend des fils de verre tels que définis par l'une des revendications 1 à 9.

## Claims

1. A glass reinforcement strand whose composition comprises the following constituents in the limits defined below, expressed in percentages by weight:
| | |
|---|---|
| SiO₂ | 55 to 66% |
| Al₂O₃ | 2 to 5% |
| B₂O₃ | 3 to 5% |
| CaO | 3 to 9%, preferably 6 to 9% |
| MgO | 2.5 to 4% |
| Na₂O | less than 17% |
| K₂O | less than 2% |
| Li₂O | less than 2% |
| Na₂O+K₂O+Li₂O | less than 18%, |
| TiO₂ | less than 1% |
| P₂O₅ | less than 1%, |
this composition further including less than 1% of other constituents and containing no fluorine.

2. The glass strand as claimed in claim 1, **characterized in that** the glass forming the strand has a working range of greater than 70°C, preferably greater than 100°C and better still greater than 140°C.

3. The glass strand as claimed in either of claims 1 and 2, **characterized in that** the glass composition has an MgO content/CaO content ratio of less than 0.5, preferably less than 0.45.

4. The glass strand as claimed in one of claims 1 to 3, **characterized in that** the glass composition contains 6 to 9% CaO.

5. The glass strand as claimed in one of claims 1 to 4, **characterized in that** the glass composition contains more than 12% Na₂O+K₂O+Li₂O.

6. The glass strand as claimed in one of claims 1 to 5, **characterized in that** it is in the form of a staple fiber.

7. The glass strand as claimed in one of claims 1 to 6, **characterized in that** it is obtained by a fiberizing process, consisting in mechanically attenuating molten glass streams flowing out from orifices placed in the base of a heated bushing, in particular one heated by resistance heating, and in assembling the filaments into strands.

8. The glass strand as claimed in claim 7, **characterized in that** the filaments are continuous.

9. The glass strand as claimed in claim 7, **characterized in that** it is in the form of a yarn made up of twist-free, substantially parallel, discontinuous filaments.

10. A composite consisting of glass strands and an organic substance, **characterized in that** it comprises glass strands as defined by one of claims 1 to 9.

## Patentansprüche

1. Verstärkender Glasfaden, dessen Zusammensetzung folgende Bestandteile innerhalb nachstehend definierter, in Gewichtsprozent angegebener Grenzen umfasst:
| | |
|---|---|
| SiO₂ | 55 bis 66 %, |
| Al₂O₃ | 2 bis 5 %, |
| B₂O₃ | 3 bis 5 %, |
| CaO | 3 bis 9 % und vorzugsweise |
| | 6 bis 9 %, |
| MgO | 2,5 bis 4 %, |
| Na₂O | weniger als 17 %, |
| K₂O | weniger als 2 %, |
| Li₂O | weniger als 2 %, |
| Na₂O + K₂O + Li₂O | weniger als 18 %, |
| TiO₂ | weniger als 1 % und |
| P₂O₅ | weniger als 1 % , |
wobei diese Zusammensetzung außerdem weniger als 1 % (eines) andere(n) Bestandteile(s) enthält und fluorfrei ist.

2. Glasfaden nach Anspruch 1, **dadurch gekennzeichnet, dass** das den Faden bildende Glas einen Arbeitsbereich von mehr als 70 °C, vorzugsweise mehr als 100 °C, und besonders bevorzugt mehr als 140 °C aufweist.

3. Glasfaden nach Anspruch 1 oder 2, **dadurch gekennzeichnet, dass** die Glaszusammensetzung ein Verhältnis von MgO-Gehalt zu CaO-Gehalt von kleiner als 0,5 und vorzugsweise kleiner als 0,45 besitzt.

4. Glasfaden nach einem der Ansprüche 1 bis 3, **dadurch gekennzeichnet, dass** die Glaszusammensetzung 6 bis 9 % CaO enthält.

5. Glasfaden nach einem der Ansprüche 1 bis 4, **dadurch gekennzeichnet, dass** die Glaszusammensetzung mehr als 12 % Na₂O + K₂O + Li₂O enthält.

6. Glasfaden nach einem der Ansprüche 1 bis 5, **dadurch gekennzeichnet, dass** er in Form eines Glasstapelfasergarns vorliegt.

7. Glasfaden nach einem der Ansprüche 1 bis 6, **dadurch gekennzeichnet, dass** er durch ein Spinnverfahren erhalten worden ist, das darin besteht, Glasstrahlen, die aus im Boden einer insbesondere durch Joulesche Wärme beheizten Spinndüse angeordneten Öffnungen fließen, mechanisch zu ziehen und die Filamente zu einem oder mehreren Fäden zu vereinigen.

8. Glasfaden nach Anspruch 7, **dadurch gekennzeichnet, dass** die Filamente endlos sind.

9. Glasfaden nach Anspruch 7, **dadurch gekennzeichnet, dass** er in Form eines Glasstapelfasergarns aus verdrillungsfreien, im Wesentlichen parallelen Fasern vorliegt.

10. Verbundmaterial aus Glasfäden und organischem Material, **dadurch gekennzeichnet, dass** es wie in einem der Ansprüche 1 bis 9 definierte Glasfäden umfasst.
